# EUROPEAN PATENT SPECIFICATION

(11) **EP 2 147 128 B1**
(45) Date of publication and mention of the grant of the patent: **28.08.2013**
(21) Application number: 08757059.4
(22) Date of filing: 21.05.2008
(51) Int. Cl.: C22B 58/00, C22C 28/00

(54) **PROCESS FOR PRODUCING PURE METALLIC INDIUM FROM ZINC OXIDE AND/OR SOLUTION CONTAINING THE METAL**
VERFAHREN ZUR HERSTELLUNG VON REINEM METALLISCHEM INDIUM AUS ZINKOXID UND/ODER EINER DIESES METALL ENTHALTENDEN LÖSUNG
PROCÉDÉ DE PRODUCTION D'INDIUM MÉTALLIQUE PUR À PARTIR D'OXYDE DE ZINC ET D'UNE SOLUTION CONTENANT LE MÉTAL

(30) Priority: 23.05.2007 BR PI0701919
(43) Date of publication of application: 27.01.2010
(73) Proprietor: Votorantim Metais Zinco S.A., Três Marias - MG (BR)
(72) Inventor: SOUZA, Adelson Dias de, Três Marias - MG (BR)
(74) Representative: Casalonga
(86) International application number: PCT/BR2008/000150
(87) International publication number: WO 2008/141409

(56) References cited:
- AU-B2- 535 822
- JP-A- 55 148 736
- US-A- 1 847 622
- US-A- 4 287 030
- US-A1- 3 976 743

## Description

This invention is intended to provide an innovative process to produce pure metallic indium using sulphured concentrates of zinc and lead as sources of the metal. Some patents have already been developed to recover indium from zinc sources, but usually at high costs and very complex processes. Patent CN1664131 refers to a process to remove indium from sulphured zinc minerals using leaching under high pressures. Patent RU2238994 relates to the extraction of indium in a zinc solution, but it does not inform how to obtain this solution and uses organophosphorous reagent to do so. Patent JP3075223 indicates oxalic acid and/or oxalate to extract indium from water solution by adjusting the pH. Patent US4292284 refers only to the extraction with a solvent of indium in water solution using an organic solvent containing monoalkylphosphoric, dialkylphosphoric, and trialkylphosphoric acids. Patent RU2275438 describes only the extraction through solvent of indium from residual solutions using an organic solvent that contains a mixture of tert-butylphenol in octanoic acid.

The Applicant developed a pioneer and complete process to recover indium from sulphured zinc concentrates usually consumed in zinc plants around the world. In general, sulphured concentrates are ustulated to produce zinc oxide, which is then leached at pH 2.0 to 4.0, in a process named Neutral Leaching. The pulp produced is thickened. The thickener underflow, also referred to as neutral underflow, containing zinc and indium ferrites, goes through a new mild leaching and is thickened again. The underflow of this mild leaching contains indium and feeds the fuming process (that is, the process to produce fumes of zinc oxide) to produce zinc oxide. The overflow of the mild leaching also contains indium in lower proportion and may or may not be part of the global process of indium recovery.

This invention is suited to both situations, where the fumes of zinc oxide and/or fumes of oxide and mild leaching overflow are processed and characterized for comprising the following steps:
a) Production of Indium Pre-concentrate;
b) Production of Indium Cement comprised, in turn, of at least a mild leaching and at least one strong leaching of the indium cement product obtained in the reducing leaching;
c) Production of Indium Solution;
d) Extraction of Indium by Organic Solvent;
e) Electrolysis of Indium;
f) Fusion, Purification, and Ingoting of the Metal;
g) electrolysis of indium to obtain a product with high purity, i.e. more than 99.995%.

The new technology is based on the simple and economic extraction of indium from metal traits contained in the zinc concentrates. When only zinc oxide is used, the process is more compact because the iron element was already extracted in the fuming step (or during the production process of zinc oxide fumes). When the complete process is used, with the contribution of the metal originated from the Mild Acid Leaching, there is one more step in the process to remove the iron, but larger amounts of indium are recovered in this process.

Enclosed you will find the following figures:
Figure 1 shows a flow chart of leaching of Waelz oxide fumes;
Figure 2 shows an indium production flow chart;
Figure 3 describes an indium recovery flow chart with weak acid leaching of neutral underflow;

### Attachment 1 presents the balance of masses of indium recovery;

Attachment 2 presents the results of the process without the inclusion of mild leaching overflow.

### (a) Production of pre-concentrate:

The production step of indium pre-concentrate comprises three basic processes: Leaching of Waelz Zinc Oxide or fuming (or in the process of production of zinc oxide fumes); Pre-Neutralization of the pulp obtained and Precipitation of Indium jointly with paragoetite or an iron composite.

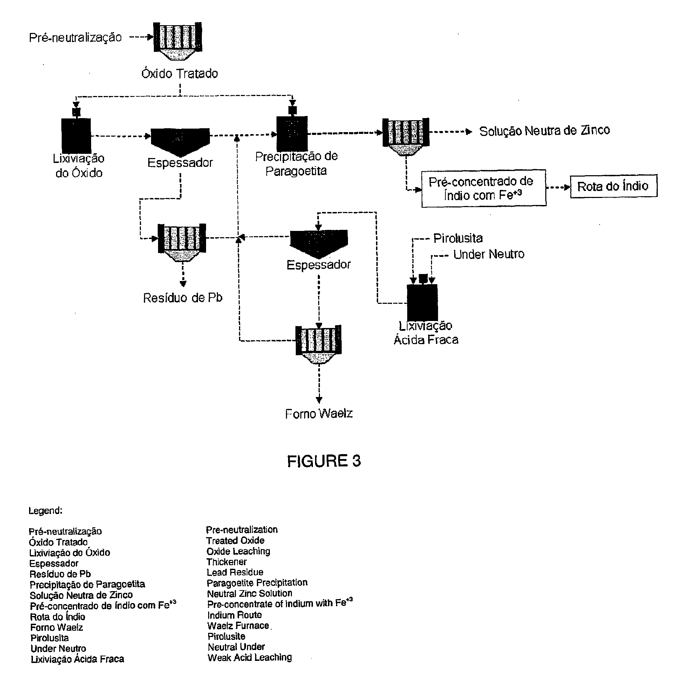

If the process includes the liquid part of Weak Acid Leaching of Neutral Underflow, the liquids are found in the Indium Precipitation stage with Paragoetite or iron composite, as illustrated in the flow chart of Figure 3.

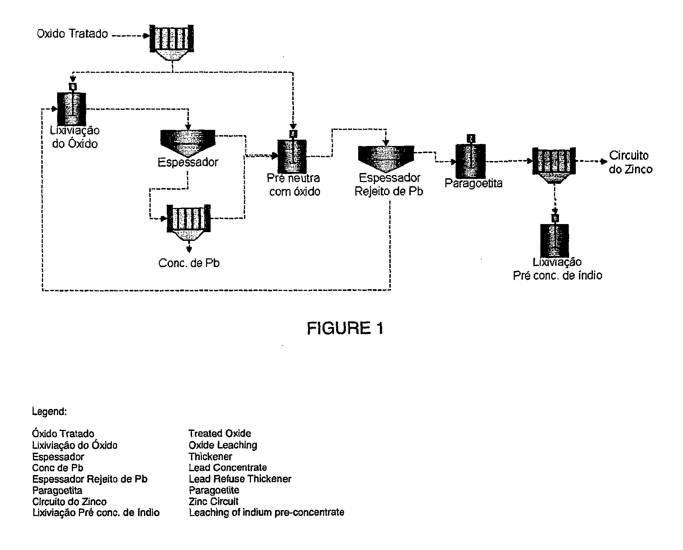

Figure 1 illustrates the flow chart of the pre-concentrate production stage (a).

The Waelz zinc oxide is leached at temperatures ranging from 70 to 80°C with a free acidity in the range of 50-70 g/L of sulphuric acid for 2 to 4 hours. The pulp produced is decanted or filtered. The indium is found in the liquid part, which then feeds the Pre-Neutralization stage. The pre-neutralization occurs at temperatures ranging from 60 to 80°C for around 1 hour of residence time, and the final acidity must be in the range of 10 to 15 g/L of sulphuric acid. Then, the decantation or filtration process is carried out.

The acidity of 10 to 15 g/L is not sufficient to remove the indium. Therefore, the metal is also found in the liquid part that feeds the Precipitation stage of indium with paragoetite. This precipitation must occur at temperatures ranging from 70 to 80°C, using a pulp of lime, limestone, Waelz zinc oxide itself or another neutralizer, with a residence time of approximately 1 hour. The pulp is decanted or filtered. Then, the solid contains the indium, which we call the indium and iron pre-concentrate. The amount of indium in this pre-concentrate may reach approximately 0.2 to 0.5% depending on the initial amount of indium in the concentrate and the fuming efficiency. Figure 1 contains the flow chart of the pre-concentrate production stage.

### (b) Production of indium cement:

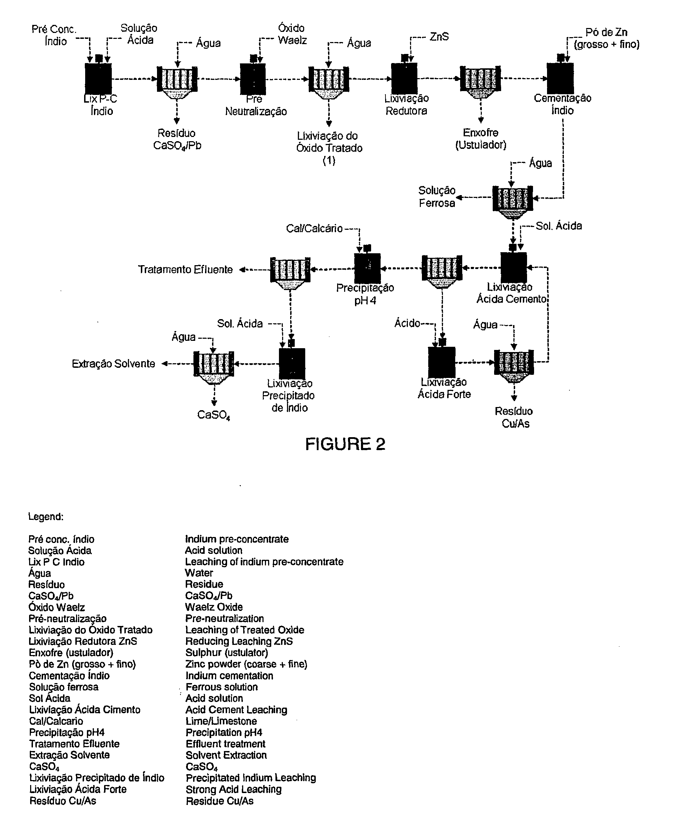

The production of indium cement begins with the leaching of the indium and iron pre-concentrate made through the acid solution with approximately 400 g/L of sulphuric acid at temperatures between 60 and 90°C for approximately 3 hours. The flow chart in Figure 2 shows the complete circuit of cement production. The final acidity must be controlled in the range of 50 g/L of sulphuric acid. The pulp is then filtered or thickened. The solid part of the thickening or filtering is a lead sulphide concentrate (with amounts beyond 50% of Pb). The filtered or liquid contains indium and iron that must proceed to the next pre-neutralization step.

The pre-neutralization occurs with an alkaline or basic reagent and lime, limestone or Waelz zinc oxide itself may be used. The operational conditions are temperatures between 60 to 70°C, retention time of approximately 1 hour, maintaining the final acidity in 15 to 20 g/L of sulphuric acid. Again, the pulp is decanted or filtered. The liquid part contains indium and ferric iron, which proceeds to the reducing leaching, the principle of which is the oxi-reduction of ferric iron to ferrous iron.

The reducing leaching occurs at temperatures from 90 to 95°C for a retention time of 2 hours. The reducing agent is the concentrate of zinc and lead sulphides itself. At the end of the reaction, the free acidity must still be maintained between 10 and 15 g/L of sulphuric acid. The pulp is then decanted or filtered. The liquid part proceeds to the cementing stage of indium with scrap zinc and zinc powder. The operational conditions are temperature between 60 and 70°C, retention time of approximately two hours and final pH at 4.0 to 4.2. This indium precipitation agent may also be zinc oxide with pH between 4 and 4.2. The pulp is filtered and then washed with water. The liquid obtained is a solution obtained from zinc and ferrous iron, which must be forwarded to the zinc circuit for the appropriate precipitation of the iron. The solid part contains the indium cement, whose metal amount may reach up to 3%.

The indium cement is then subject to two or more leachings. One strong and one weak leaching in countercurrents. The weak leaching of cement occurs at temperatures of 90°C for approximately 3 hours with an acid solution to obtain the final acidity of 10 to 20 g/L of sulphuric acid. The pulp obtained is then decanted or filtered. The solid part proceeds to the strong acid leaching. This stage occurs at temperatures of 90°C for 4 hours, maintaining a final acidity of 100 g/L of sulphuric acid. The pulp is decanted or filtered. The solid part obtained is a copper concentrate. The liquid part, rich in sulphuric acid, is used to make the weak acid leaching (in countercurrent). The liquid part of the weak acid leaching, rich in indium, proceeds to the indium precipitation stage with lime, limestone, sodium or another neutralizing agent. The effect of the extraction through solvent is the concentration of indium. Hence, the indium precipitation stage with lime, limestone, soda or another neutralizing agent can be eliminated in some cases with the use of extraction through solvent for the solution diluted in an O/A relation above 3. In this case, the solution obtained will be ready to feed the extraction stage through organic solvent.

The precipitation of indium occurs with pH between 4 and 4.5 for approximately 2 hours, where the initial acidity of approximately 15 to 20 g/L is neutralized with the indicated agents. The pulp is then filtered. The filtered that is poor in zinc and other elements proceeds to a treatment of effluents. The solid part proceeds to the leaching of the indium concentrate. Here begins the production of the indium solution for extraction through organic solvent.

### (c) Production of indium solution:

The production of the indium solution with final amounts between 1.5 to 5.0 g/L of the metal occurs during the leaching of the concentrate at temperatures from 60 to 80°C and a retention time of approximately 2 hours. The pulp obtained is filtered and washed with water. The indium solution must contain at least 1.5 g/L of the metal. This is a good condition to feed the extraction unit by organic solvent.

### d) Extraction of indium by organic solvent:

The extraction of the indium contained in the liquor is carried out in FRP cells (fiber-reinforced plastic, a composite material made of a polymer matrix reinforced with fibers), which have pump mixers (stirrers with simultaneous pumping), where the indium present in the aqueous phase is transferred to the organic phase.

The process uses an organic phase containing mono-, di-, or trialkylphosphoric acid in organic solvent, for instance, a solution containing 25% DEPA - hexyl phosphoric acid - in kerosene to promote the selective extraction of the indium in the O/A outflow relation = 1/7.5 (O/A organic phase relation to aqueous phase). The organic phase charged with indium feeds the stripping or re-extraction stage, which is also performed in 3 or more cells, preferably identical in the O/A outflow relation = 3/1.

The stripping or re-extraction agent is preferably the hydrochloric acid, such as, for instance, in a 6M HCL solution that enables the production of indium chloride solution.

The stripping agent is a 6M HCL solution that enables the production of indium chloride solution with the following approximate composition, as indicated in Table 1 below:

**TABLE 1**

| In (g/l) | Cu (mg/l) | Pb (mg/l) | Fe (mg/l) | Zn (mg/l) |
|---|---|---|---|---|
| 80-100 | 35 | 60 | 6 - 8 | 10-15 |

Later, the solution can be subject to the purification process with the addition of H2S, if necessary.

The purified solution has the following approximate composition, as indicated in Table 2 below:

**TABLE 2**

| In (g/l) | Cu (mg/l) | Pb (mg/l) | Fe (mg/l) | Zn (mg/l) |
|---|---|---|---|---|
| 80-100 | 0.01 | 0.01 | 1.5 | 1-5 |

### (e) Indium cementation:

The technology adopted to obtain indium is the cementation process for 24 hours or until it reaches 0.02 g/L of In, using aluminum plates, according to the reaction below:

In+3 + Al → Al+3 + In

### (f) Fusion, Purification, and Ingoting of the Metal;

The cements produced are washed with water and pressed (2 kg) to form brickets with diameter and thickness of 5 cm.

The fusion of the bricket is carried out in a furnace at 260°C, with sodium hydroxide as the scorifying agent.

The indium is refined in another furnace with the addition of ammonia chloride with strong stirring. This refining can also be made in the same fusion furnace and the addition of ammonia chloride is option for the purification of the metal.

The slag formed is removed with a skimmer and the metal is manually poured into ingots of 100 OZ (approximately 3.1 kg), packed into wood boxes with 10 ingots.

The product presents a minimum of 99.99% of indium, with the maximum impurity of 100 ppm. A product with at least 97% of purity can also be obtained if the impurity amounts of the solution and purification of the metal are kept in higher levels. In this case, the electrolytic purification can guarantee a much higher purity, beyond 99.995%.

The indium ingot of 99.9910% has the following approximate impurity composition, as shown in Table 3 below:

**TABLE 3 - Approximate impurity composition of Indium Ingot 99.99%**

| Ag (ppm) | Cu (ppm) | Pb (ppm) | Fe (ppm) | Zn (ppm) |
|---|---|---|---|---|
| 1 | 15 | 30 | 1 | 40 |

### (g) Production of electrolytic indium of minimum purity of 99.995%:

The production of electrolytic indium of minimum purity of 99.995% of indium is carried out through the sub-processes below:
(g-1) Production of the Indium Anode
(g-2) Active Electrolysis
(g-3) Fusion of the anodes and purification
(g-4) Ingoting of the fused indium

### (g-1) Production of the Indium Anode:

The indium ingot with purity above 97% is melted with soda (NaOH) or another flux at 260°C to form an impure indium anode.

### (g-2) Active Electrolysis:

The electrolysis of indium consists of one electrolytic cell with an indium anode of purity equal or above 97% and a titanium cathode. The electrolysis operation conditions are: electric current density of 0.02 to 0.03 A/m2; indium chloride solution with at least 100 g/L of the amount of the dissolved metal; gelatin in approximate concentration of 0.1 g/L. The surface of the fused anodes must not include oxides, i.e. polished and glossy. The high purity indium is then deposited on the titanium cathode, and the deposit is removed at determined intervals (24, 32, or 48 hours).

The indium cathode obtained must be washed with acid water, then with water, and then dried at approximately 50 to 60°C.

### (g-3) Fusion of the anodes and purification:

The fusion of the indium cathode occurs at 260°C with soda or another flux, and ammonia chloride may be used as purifier, if necessary.

### (g-4) Ingoting of the fused indium:

The fused indium is poured into ingot molds to produce ingots of 1 to 3 kg. The maximum impurity composition in the indium ingot 99.995% will be in ppm: Cd max 2; copper max 10; tin max 2; iron max 5; nickel max 5; minor silver 0.1; lead max 10; thallium max 2, bismuth max 2, and zinc max 5, so that the sum of such impurities is below 50 ppm.

The following are examples intended to better illustrate the invention. However, they do not limit the invention.

### EXAMPLE 1:

### INDIUM PROCESS INCLUDING CONTRIBUTION OF MILD LEACHING OF NEUTRAL UNDERFLOW - FLOW CHART FIGURE 3 AND RESULTS ATTACHMENT 1:

### Amount of indium in the Waelz zinc oxide: 0.0510

Amount of indium in the liquid part of the mild leaching of neutral underflow: 15 mg/L
Indium solution produced - amount of indium 1.85 g/L
Solution after extraction with solvent - amount of indium 93 g/L
Metal produced - indium 99.992%
Total recovery - 77%

### EXAMPLE 2:

### INDIUM RECOVERY PROCESS WITHOUT THE INCLUSION OF CONTRIBUTION OF MILD LEACHING OVERFLOW OF NEUTRAL UNDERFLOW

Amount of indium in the Waelz zinc oxide: 0.03800
   Amount of indium in the liquid part of the mild leaching of neutral underflow: not considered.
Indium solution produced - amount of indium 1.85 g/L
   Solution after extraction with solvent - amount of indium 97 g/L
   Metal produced - indium 99.993%
   Total recovery - 78%

### EXAMPLE 3:

### Extraction of indium by organic solvent:

The extraction of the indium contained in the liquor was performed in FRP cells provided with Pump Mixers, where the indium present in the aqueous phase was transferred to the organic phase.

The process makes use of an organic phase containing 25% DEPA (hexyl phosphoric acid) in kerosene for the selective extraction of indium in the O/A outflow relation = 1/7.5. The organic phase charged with indium fed the stripping or re-extraction phase, which was also performed in 4 identical cells in the O/A relation = 3/1.

The stripping or re-extraction agent used was a 6M HCL solution that enabled the production of an indium chloride solution with the following approximate composition, as indicated in Table 4 below:

**TABLE 4**

| In (g/l) | Cu (mg/l) | Pb (mg/l) | Fe (mg/l) | Zn (mg/l) |
|---|---|---|---|---|
| 80-100 | 35 | 60 | 6-8 | 10-15 |

The purified solution presented the following approximate composition, as indicated in Table 5 below:

**TABLE 5 - Approximate composition of the purified solution**

| In (g/l) | Cu (mg/l) | Pb (mg/l) | Fe (mg/l) | Zn (mg/l) |
|---|---|---|---|---|
| 80-100 | 0.01 | 0.01 | 1.5 | 1-5 |

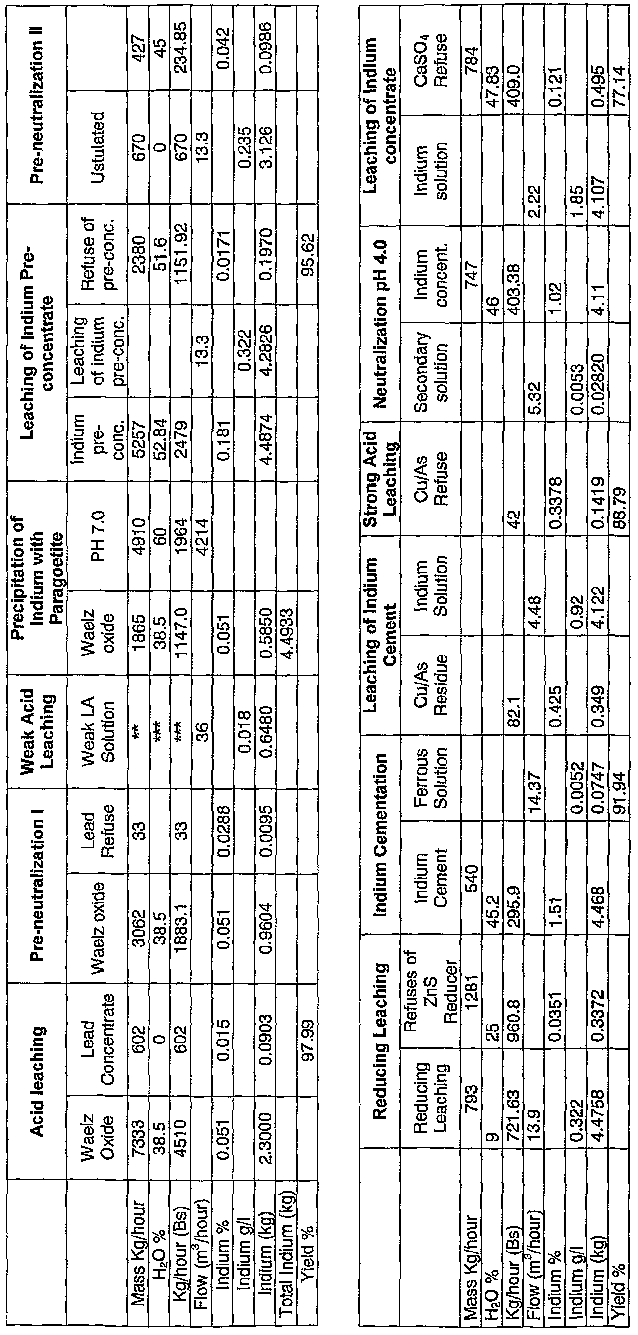

**Simulation of the Industrial Flow - Mass balance and flow/hour in October 2006**

| | | Mass Kg (Bu) | H₂O % | Mass Kg (Bs) | Liquid (m³) | Indium % | Indium g/l | Indium (kg) | Indium Total (kg) | Yield % |
|---|---|---|---|---|---|---|---|---|---|---|
| Acid Leaching | Waelz Oxide | 7589 | 36% | 4857.0 | | 0.04 | | 1.9428 | 1.9428 | |
| | | | | | | | | | | |
| | Lead Concentrate | 1038 | 0% | 1038.4 | | 0.0062 | | 0.0644 | | 96.69 |
| Pre-Neutralization I | Waelz Oxide | 2731 | 36% | 1747.8 | | 0.04 | | 0.6991 | 2.6419 | |
| | Solution | | | | 44.1 | | 0.06 | 2.6478 | | |
| | Lead Refuse | 95.02 | 0% | 95.0 | | 0.0123 | | 0.0117 | | |
| Precipitation of Indium as [with] Paragoetite | Waelz Oxide | 892 | 36.00% | 570.9 | | 0.04 | | 0.2284 | 2.8703 | |
| | PH 7.0 | 843.3 | 0% | 843.3 | 5.19 | | | | | |
| | ZnSO₄ solution | | | | 45.0 | | 0.0024 | 0.108 | | |
| | Indium Pre-concentrate | 2434.9 | 52.04% | 1167.8 | | 0.23 | | 2.6859 | | 93.58 |
| Leaching of Indium Preconcentrate | Solution | | | | 8.31 | | 0.329 | 2.7329 | | |
| | Refuse of pre-concent. | 860.6 | 0% | 860.6 | | 0.0073 | | 0.0628 | | 91.40 |
| Pre-neutralization II + Reducing LX | Waelz Oxide | 254 | 36% | 162.6 | | 0.04 | | 0.065 | 2.9353 | |
| | ZnS concentrate | 605.7 | 9% | 551.2 | | 0.015 | | 0.0827 | | |
| | Solution | | | | 8.57 | | 0.328 | 2.519 | | |
| | Pb/ZnS Refuse | 874.9 | 27.40% | 635.1 | | 0.0121 | | 0.0769 | | 85.82 |
| Indium Cementation | Zinc scrap | 108 | 0 | 25.0 | | | | | | |
| | Zinc powder | 78 | 0 | 16.0 | | | | | | |
| | Indium cement | 377.1 | 30% | 264.0 | | 0.97 | | | 2.5603 | 87.23 |
| | Ferrous solution | | | | 8.709 | | 0.016 | 0.1393 | | |
| Leaching of Indium Cement | Indium solution | | | | 3.03 | | 0.713 | 2.159 | | |
| | Cement residue | 58.8 | 0% | 58.8 | | 0.494 | | 0.291 | | 83.00 |
| | Acid Pulp | | | | 1.73 | | 0.16 | 0.277 | | |
| | Cu/As Refuse | 20.3 | 0% | 20.3 | | 0.091 | | 0.019 | | |
| Neutralization pH 4.0 | Lime | 99.5 | 0% | 99.5 | | | | | | |
| | Solution | | | | 4.24 | | 0.005 | 0.02120 | | |
| | Indium concentrate | 549 | 56% | 241.8 | | 0.85 | | 2.0550 | | 79.443 |
| Leaching of indium concentrate | Indium solution | | | | 1.12 | | 1.74 | 1.957 | 1.957295 | |
| | CaSO₄ refuse | 454 | 56% | 199.9 | | 0.05 | | 0.0999 | | 76.11 |

## Claims

1. PROCESS FOR PRODUCING PURE METALLIC INDIUM FROM ZINC OXIDE AND/OR SOLUTION CONTAINING THE METAL, **characterized by** the following stages:
a) Production of indium pre-concentrate;
b) production of indium cement: comprised, in turn, of at least a mild leaching and at least one strong leaching of the indium cement product obtained in the reducing leaching;
c) Production of indium solution;
d) Extraction of indium by organic solvent;
e) Electrolysis of indium;
f) Fusion, purification, and ingoting of the metal;
g) Electrolysis of indium to obtain a product with high purity, above 99.995%.

2. PROCESS FOR PRODUCING PURE METALLIC INDIUM FROM ZINC OXIDE AND/OR SOLUTION CONTAINING THE METAL, according to claim 1, **characterized by** the use of sulphured concentrates of zinc and lead as sources of metal.

3. PROCESS FOR PRODUCING PURE METALLIC INDIUM FROM ZINC OXIDE AND/OR SOLUTION CONTAINING THE METAL, according to claim 1, **characterized by** the solution or zinc oxide containing or not iron.

4. PROCESS FOR PRODUCING PURE METALLIC INDIUM FROM ZINC OXIDE AND/OR SOLUTION CONTAINING THE METAL, according to claim 3, wherein in the case in which it contains iron, it can be previously extracted in the stage of production of zinc oxide fumes.

5. PROCESS FOR PRODUCING PURE METALLIC INDIUM FROM ZINC OXIDE AND/OR SOLUTION CONTAINING THE METAL, according to claim 1, wherein the stage (a) can be comprised of acid leaching of zinc oxide, pre-neutralization of the pulp obtained, and precipitation of the indium.

6. PROCESS FOR PRODUCING PURE METALLIC INDIUM FROM ZINC OXIDE AND/OR SOLUTION CONTAINING THE METAL, according to claim 5, wherein the liquid part containing indium and obtained through leaching passes to the pre-neutralization stage.

7. PROCESS FOR PRODUCING PURE METALLIC INDIUM FROM ZINC OXIDE AND/OR SOLUTION CONTAINING THE METAL, according to claim 5 or 6, wherein the pre-neutralization occurs at temperature and acidity conditions that are milder than those of leaching.

8. PROCESS FOR PRODUCING PURE METALLIC INDIUM FROM ZINC OXIDE AND/OR SOLUTION CONTAINING THE METAL, according to claim 5, wherein the feeding of the leaching stage of the indium pre-concentrate leaching may be carried out using the solid or liquid part obtained after filtration or decantation of the pre-neutralized oxide.

9. PROCESS FOR PRODUCING PURE METALLIC INDIUM FROM ZINC OXIDE AND/OR SOLUTION CONTAINING THE METAL, according to claim 1, wherein in stage (a) the precipitation of iron may occur jointly with paragoetite or a composite with iron.

10. PROCESS FOR PRODUCING PURE METALLIC INDIUM FROM ZINC OXIDE AND/OR SOLUTION CONTAINING THE METAL, according to claim 1, wherein the stage (b) can be comprised of leaching of the indium pre-concentrate, pre-neutralization, reducing leaching, and cementation of indium.

11. PROCESS FOR PRODUCING PURE METALLIC INDIUM FROM ZINC OXIDE AND/OR SOLUTION CONTAINING THE METAL, according to claim 10, wherein the thickening and filtration of the product of leaching of the pre-concentrate produces a solid part, comprised of lead sulphate, and that the filtered or the liquid part proceed to the pre-neutralization stage.

12. PROCESS FOR PRODUCING PURE METALLIC INDIUM FROM ZINC OXIDE AND/OR SOLUTION CONTAINING THE METAL, according to claim 10, wherein the pre-neutralization occurs in the presence of afkafinizing or basic agent, with the product being decanted or filtered, and the liquid part forwarded to the reducing leaching stage.

13. PROCESS FOR PRODUCING PURE METALLIC INDIUM FROM ZINC OXIDE AND/OR SOLUTION CONTAINING THE METAL, according to claim 10 or 11, wherein a reduction of ferric iron to ferrous iron occurs in the reducing leaching stage.

14. PROCESS FOR PRODUCING PURE METALLIC INDIUM FROM ZINC OXIDE AND/OR SOLUTION CONTAINING THE METAL, according to claim 10, wherein the reducing agent can be the concentrated of sulphides of zinc and lead.

15. PROCESS FOR PRODUCING PURE METALLIC INDIUM FROM ZINC OXIDE AND/OR SOLUTION CONTAINING THE METAL, according to claim 10, wherein the pulp or product of reducing leaching is decanted or filtered, with the liquid part containing zinc and ferrous iron forwarded to the zinc circuit, and the solid part containing indium cement proceeds to the indium cementation stage.

16. PROCESS FOR PRODUCING PURE METALLIC INDIUM FROM ZINC OXIDE AND/OR SOLUTION CONTAINING THE METAL, according to claim 15, wherein the indium cement is subject to two or more leachings, with at least one mild and one strong leaching in countercurrent.

17. PROCESS FOR PRODUCING PURE METALLIC INDIUM FROM ZINC OXIDE AND/OR SOLUTION CONTAINING THE METAL, according to claim 16, wherein the underflow obtained through strong leaching can be recycled to the liquid part of the mild leaching stage.

18. PROCESS FOR PRODUCING PURE METALLIC INDIUM FROM ZINC OXIDE AND/OR SOLUTION CONTAINING THE METAL, according to claim 15 or 16, wherein the liquid part of the weak leaching containing indium proceeds to the indium precipitation stage with neutralizing agent.

19. PROCESS FOR PRODUCING PURE METALLIC INDIUM FROM ZINC OXIDE AND/OR SOLUTION CONTAINING THE METAL, according to claim 18, wherein the solid product obtained by filtration or decantation of the leaching of the indium concentrate proceeds to the production stage of the indium solution.

20. PROCESS FOR PRODUCING PURE METALLIC INDIUM FROM ZINC OXIDE AND/OR SOLUTION CONTAINING THE METAL, according to claim 1, wherein the stage (c) is comprised of the production of indium solution through the leaching of the concentrate obtained in the previous stage, forwarded at the end to the filtration and washing with water.

21. PROCESS FOR PRODUCING PURE METALLIC INDIUM FROM ZINC OXIDE AND/OR SOLUTION CONTAINING THE METAL, according to claim 1, wherein the solution obtained in stage (c) proceeds to stage (d) which is extraction of the indium by an organic solvent.

22. PROCESS FOR PRODUCING PURE METALLIC INDIUM FROM ZINC OXIDE AND/OR SOLUTION CONTAINING THE METAL, according to claim 21, comprising the use of mono-, di-, or tri-alkytphosphoric acid as the organic phase in organic solvent.

23. PROCESS FOR PRODUCING PURE METALLIC INDIUM FROM ZINC OXIDE AND/OR SOLUTION CONTAINING THE METAL, according to claim 21, wherein the extraction agent is hydrochloric acid.

24. PROCESS FOR PRODUCING PURE METALLIC INDIUM FROM ZINC OXIDE AND/OR SOLUTION CONTAINING THE METAL, according to claim 1, wherein the metallic indium can be obtained by electrolysis (stage e) with the use of aluminum plates.

25. PROCESS FOR PRODUCING PURE METALLIC INDIUM FROM ZINC OXIDE AND/OR SOLUTION CONTAINING THE METAL, according to claim 1, wherein in the formation of the bricket (stage (f)), caustic soda can be used as scorifying agent, and ammonia chloride can be used in the refining of indium.

26. PROCESS FOR PRODUCING PURE METALLIC INDIUM FROM ZINC OXIDE AND/OR SOLUTION CONTAINING THE METAL, according to claim 1, wherein any of the sub-processes indicated below can occur in stage (g) or in the production of high purity electrolytic indium:
(g-1) Production of the Indium Anode; or,
(g-2) Active Electrolysis; or,
(g-3) Fusion of the anodes and purification; or,
(g-4) Ingoting of the fused indium.

## Patentansprüche

1. VERFAHREN ZUR HERSTELLUNG VON REINEM METALLISCHEM INDIUM AUS ZINKOXID UND/ODER EINER LÖSUNG, DIE DAS METALL ENTHÄLT,
**gekennzeichnet durch** die folgenden Stufen:
a) Herstellung von Indium-Vorkonzentrat;
b) Herstellung von Indiumzement: bestehend nacheinander aus mildem Laugen und mindestens einem starken Laugen des Indiumzementprodukts, das beim reduzierten Laugen erhalten wird;
c) Herstellung von Indiumlösung;
d) Extraktion von Indium **durch** organisches Lösungsmittel;
e) Elektrolyse von Indium;
f) Schmelzen, Reinigung und Barrenbildung mit dem Metall;
g) Elektrolyse von Indium, um ein Produkt hoher Reinheit von über 99,995 % zu erhalten.

2. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, **gekennzeichnet durch** die Verwendung von geschwefeltem Konzentrat von Zink und Blei als Metallquellen.

3. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, **gekennzeichnet durch** die Lösung oder Zinkoxid, die/das Eisen enthält oder nicht.

4. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 3, wobei in dem Fall, in dem sie Eisen enthält, sie vorher auf der Stufe der Herstellung von Zinkoxiddämpfen extrahiert werden kann.

5. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei die Stufe (a) aus Säurelaugen von Zinkoxid, Vorneutralisieren des erhaltenen Breis und Ausfällen des Indiums bestehen kann.

6. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 5, wobei der flüssige Teil, der Indium enthält und durch Laugen erhalten worden ist, zur Vorneutalisierungsstufe übergeht.

7. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 5 oder 6, wobei die Vorneutralisierung unter Temperatur- und Aziditätsbedingungen stattfindet, die milder als diejenigen des Laugens sind.

8. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 5, wobei das Versorgen der Laugungsstufe des Indiumvorkonzentratlaugens unter Anwendung des festen oder flüssigen Teils, der nach dem Filtrieren oder Dekantieren des vorneutralisierten Oxids erhalten wird, durchgeführt werden kann.

9. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei in der Stufe (a) die Ausfällung von Eisen zusammen mit Paragoethit oder einem Verbundstoff mit Eisen stattfinden kann.

10. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei die Stufe (b) das Laugen des Indiumvorkonzentrats, die Vorneutralisierung, das Reduktionslaugen und die Zementierung von Indium umfassen kann.

11. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 10, wobei das Verdicken und Filtrieren des Produkts des Laugens des Vorkonzentrats einen festen Teil erzeugt, der aus Bleisulfat besteht, und der filtrierte oder der flüssige Teil zur Vorneutralisationsstufe weitergeht.

12. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 10, wobei das Vorneutralisieren in Gegenwart eines Alkalinisierungs- oder basischen Mittels stattfindet, wobei das Produkt dekantiert oder filtriert wird und der flüssige Teil zur Reduktionslaugungsstufe geschickt wird.

13. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 10 oder 11, wobei eine Reduktion von Eisen(III) zu Eisen(II) während der Reduktionslaugungsstufe stattfindet.

14. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 10, wobei das Reduktionsmittel das Konzentrat von Sulfiden von Zink und Blei sein kann.

15. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 10, wobei der Brei oder das Produkt des Reduktionslaugens dekantiert oder filtriert wird, wobei der flüssige Teil, der Zink und Eisen enthält, zum Zinkkreislauf geschickt wird und der feste Teil, der Indiumzement enthält, zur Indiumzementierstufe geht.

16. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 15, wobei der Indiumzement zwei oder mehr Laugungen unterworfen wird, wobei mindestens eine milde und eine starke Laugung im Gegenstrom erfolgt.

17. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 16, wobei der durch starkes Laugen erhaltene Unterstrom in den flüssigen Teil der milden Laugungsstufe rückgeführt werden kann.

18. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 15 oder 16, wobei der flüssige Teil des schwachen Laugens, der Indium enthält, zur Indiumausfällungsstufe mit Neutralisiermittel geht.

19. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 18, wobei das feste Produkt, das durch Filtrieren oder Dekantieren der Laugung des Indiumkonzentrats erhalten wird, zur Herstellungsstufe der Indiumlösung geht.

20. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei die Stufe (c) aus der Herstellung von Indiumlösung durch das Laugen des Konzentrats, das in der vorherigen Stufe erhalten worden ist, und das am Ende zur Filtrierung und zum Waschen mit Wasser geschickt wird, besteht.

21. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei die Lösung, die in der Stufe (c) erhalten wird, zur Stufe (d) geht, die aus der Extraktion des Indiums durch ein organisches Lösungsmittel besteht.

22. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 21, umfassend die Verwendung von Mono-, Di- oder Trialkylphosphorsäure als organische Phase in organischem Lösungsmittel.

23. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 21, wobei das Extraktionsmittel Salzsäure ist.

24. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei das metallische Indium durch Elektrolyse (Stufe e) unter Verwendung von Aluminiumplatten erhalten werden kann.

25. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei bei der Bildung des Briketts (Stufe (f)), Ätznatron als Verschlackungsmittel und Ammoniumchlorid beim Raffinieren von Indium verwendet werden kann.

26. VERFAHREN ZUR HERSTELLUNG VON REINEM METALLISCHEM INDIUM AUS ZINKOXID UND/ODER EINER LÖSUNG, DIE DAS METALL ENTHÄLT, nach Anspruch 1, wobei irgend eines der unten angegebenen Unterverfahren in der Stufe (g) oder bei der Herstellung von hochreinem elektrolytischen Indium erfolgen kann:
(g-1)Herstellung der Indiumanode; oder
(g-2)aktive Elektrolyse; oder
(g-3)Schmelzen der Anoden und Reinigung; oder
(g-4)Barrenbildung des geschmolzenen Indiums.

## Revendications

1. Procédé de production d'indium métallique pur à partir d'oxyde de zinc et/ou d'une solution contenant de ce métal, **caractérisé par** les étapes suivantes :
a) production d'un pré-concentré d'indium ;
b) production d'un cément d'indium, comprenant au moins un lessivage modéré et au moins un lessivage poussé du produit cément d'indium obtenu lors du lessivage réducteur ;
c) production d'une solution d'indium ;
d) extraction de l'indium par un solvant organique ;
e) électrolyse de l'indium ;
f) fusion, purification et mise en lingots du métal,
g) électrolyse de l'indium, pour obtenir un produit de haute pureté, supérieure à 99,995 %.

2. Procédé de production d'indium métallique pur à partir d'oxyde de zinc et/ou d'une solution contenant de ce métal, conforme à la revendication 1, **caractérisé par** l'emploi de concentrés sulfurés de zinc et de plomb en tant que sources de métal.

3. Procédé de production d'indium métallique pur à partir d'oxyde de zinc et/ou d'une solution contenant de ce métal, conforme à la revendication 1, **caractérisé par le fait que** la solution ou l'oxyde de zinc contient du fer ou non.

4. Procédé de production d'indium métallique pur à partir d'oxyde de zinc et/ou d'une solution contenant de ce métal, conforme à la revendication 3, dans lequel, dans le cas où du fer est présent, il peut être extrait au préalable lors de l'étape de production de fumées d'oxyde de zinc.

5. Procédé de production d'indium métallique pur à partir d'oxyde de zinc et/ou d'une solution contenant de ce métal, conforme à la revendication 1, dans lequel l'étape (a) peut comporter un lessivage acide de l'oxyde de zinc, une pré-neutralisation de la pâte obtenue et une précipitation de l'indium.

6. Procédé de production d'indium métallique pur à partir d'oxyde de zinc et/ou d'une solution contenant de ce métal, conforme à la revendication 5, dans lequel la partie liquide contenant l'indium, obtenue par lessivage, est envoyée à l'étape de pré-neutralisation.

7. Procédé de production d'indium métallique pur à partir d'oxyde de zinc et/ou d'une solution contenant de ce métal, conforme à la revendication 5 ou 6, dans lequel la pré-neutralisation se déroule dans des conditions de température et d'acidité qui sont plus douces que celles du lessivage.

8. Procédé de production d'indium métallique pur à partir d'oxyde de zinc et/ou d'une solution contenant de ce métal, conforme à la revendication 5, dans lequel on peut alimenter l'étape de lessivage du pré-concentré d'indium avec la partie solide ou la partie liquide qu'on obtient après filtration ou décantation du produit de pré-neutralisation de l'oxyde.

9. Procédé de production d'indium métallique pur à partir d'oxyde de zinc et/ou d'une solution contenant de ce métal, conforme à la revendication 1, dans lequel, dans l'étape (a), la précipitation du fer peut avoir lieu conjointement avec celle de la paragoethite ou d'un composite formé avec du fer.

10. Procédé de production d'indium métallique pur à partir d'oxyde de zinc et/ou d'une solution contenant de ce métal, conforme à la revendication 1, dans lequel l'étape (b) peut comporter un lessivage du pré-concentré d'indium, une pré-neutralisation, un lessivage réducteur, et une cémentation de l'indium.

11. Procédé de production d'indium métallique pur à partir d'oxyde de zinc et/ou d'une solution contenant de ce métal, conforme à la revendication 10, dans lequel l'épaississement et la filtration du produit du lessivage du pré-concentré donne une partie solide, constituée de sulfate de plomb, et la partie liquide ou filtrat subit l'étape de pré-neutralisation.

12. Procédé de production d'indium métallique pur à partir d'oxyde de zinc et/ou d'une solution contenant de ce métal, conforme à la revendication 10, dans lequel la pré-neutralisation se déroule en présence d'un agent alcalinisant ou basique, le produit subit une décantation ou une filtration, et la partie liquide est envoyée à l'étape de lessivage réducteur.

13. Procédé de production d'indium métallique pur à partir d'oxyde de zinc et/ou d'une solution contenant de ce métal, conforme à la revendication 10 ou 11, dans lequel, au cours de l'étape de lessivage réducteur, il y a réduction du fer ferrique en fer ferreux.

14. Procédé de production d'indium métallique pur à partir d'oxyde de zinc et/ou d'une solution contenant de ce métal, conforme à la revendication 10, dans lequel l'agent réducteur peut être un concentré de sulfures de zinc et de plomb.

15. Procédé de production d'indium métallique pur à partir d'oxyde de zinc et/ou d'une solution contenant de ce métal, conforme à la revendication 10, dans lequel la pâte ou le produit du lessivage réducteur subit une décantation ou une filtration, la partie liquide contenant le zinc et les ions ferreux est envoyée vers le circuit du zinc, et la partie solide contenant le cément d'indium subit l'étape de cémentation d'indium.

16. Procédé de production d'indium métallique pur à partir d'oxyde de zinc et/ou d'une solution contenant de ce métal, conforme à la revendication 15, dans lequel le cément d'indium est soumis à deux lessivages ou plus, dont au moins un lessivage modéré et un lessivage poussé, opérés à contre-courant.

17. Procédé de production d'indium métallique pur à partir d'oxyde de zinc et/ou d'une solution contenant de ce métal, conforme à la revendication 16, dans lequel le courant de fond obtenu lors du lessivage poussé peut être recyclé dans la partie liquide de l'étape de lessivage modéré.

18. Procédé de production d'indium métallique pur à partir d'oxyde de zinc et/ou d'une solution contenant de ce métal, conforme à la revendication 15 ou 16, dans lequel la partie liquide du lessivage modéré, contenant de l'indium, subit l'étape de précipitation d'indium opérée avec un agent de neutralisation.

19. Procédé de production d'indium métallique pur à partir d'oxyde de zinc et/ou d'une solution contenant de ce métal, conforme à la revendication 18, dans lequel le produit solide obtenu par filtration ou décantation du produit de lessivage du concentré d'indium subit l'étape de production d'une solution d'indium.

20. Procédé de production d'indium métallique pur à partir d'oxyde de zinc et/ou d'une solution contenant de ce métal, conforme à la revendication 1, dans lequel l'étape (c) comporte la production d'une solution d'indium par lessivage du concentré obtenu dans l'étape précédente et envoyé à la fin en filtration, et lavage avec de l'eau.

21. Procédé de production d'indium métallique pur à partir d'oxyde de zinc et/ou d'une solution contenant de ce métal, conforme à la revendication 1, dans lequel la solution obtenue dans l'étape (c) subit l'étape (d) qui consiste à en extraire l'indium au moyen d'un solvant organique.

22. Procédé de production d'indium métallique pur à partir d'oxyde de zinc et/ou d'une solution contenant de ce métal, conforme à la revendication 21, comprenant l'utilisation d'un acide monoalkylphosphorique, dialkyl-phosphorique ou trialkyl-phosphorique en tant que phase organique dans le solvant organique.

23. Procédé de production d'indium métallique pur à partir d'oxyde de zinc et/ou d'une solution contenant de ce métal, conforme à la revendication 21, dans lequel l'agent d'extraction est de l'acide chlorhydrique.

24. Procédé de production d'indium métallique pur à partir d'oxyde de zinc et/ou d'une solution contenant de ce métal, conforme à la revendication 1, dans lequel l'indium métallique peut être obtenu par électrolyse (étape e) à l'aide de plaques d'aluminium.

25. Procédé de production d'indium métallique pur à partir d'oxyde de zinc et/ou d'une solution contenant de ce métal, conforme à la revendication 1, dans lequel, dans la formation d'une briquette (étape (f)), on peut utiliser de la soude caustique comme agent de scorification, et du chlorure d'ammonium dans le raffinage de l'indium.

26. Procédé de production d'indium métallique pur à partir d'oxyde de zinc et/ou d'une solution contenant de ce métal, conforme à la revendication 1, dans lequel n'importe lequel des procédés secondaires indiqués ci-dessous peut intervenir dans l'étape (g) ou dans la production d'indium électrolytique de haute pureté :
(g-1) production d'anodes en indium ;
(g-2) électrolyse active ;
(g-3) fusion des anodes et purification ;
(g-4) ou mise en lingots de l'indium fondu.
